Europäisches Patentamt

European Patent Office

Office européen des brevets

(11) Veröffentlichungsnummer: **0 392 337 B1**

(12) # EUROPÄISCHE PATENTSCHRIFT

(45) Veröffentlichungstag der Patentschrift: **02.02.94**

(51) Int. Cl.⁵: **G01N 21/71**, G01N 21/62

(21) Anmeldenummer: **90106473.3**

(22) Anmeldetag: **05.04.90**

(54) **Verfahren zur Bestimmung des Konzentrationsverhältnisses zweier Elemente eines Stoffs aus dem Intensitätsverhältnis zweier Spektrallinien dieser Elemente in einem Plasma dieses Stoffs.**

(30) Priorität: **12.04.89 DE 3911965**

(43) Veröffentlichungstag der Anmeldung:
**17.10.90 Patentblatt 90/42**

(45) Bekanntmachung des Hinweises auf die
Patenterteilung:
**02.02.94 Patentblatt 94/05**

(84) Benannte Vertragsstaaten:
**AT BE CH ES FR GB IT LI LU NL SE**

(56) Entgegenhaltungen:

**OPTICS AND LASER TECHNOLOGY Band 12,
Nr. 3, Juni 1980, Seiten 137-143, Haywards,
Heath, GB; R.S. ADRAIN et al.: "Laser microspectral analysis of steels"**

**LASER + ELEKTRO-OPTIK vol. 12, Nr. 3, September 1980, Seiten 5-9, Stuttgart, DE; R.S.
ADRAIN et al.: "Robust Portable Computerised Laser Micro-Spectrograph"**

(73) Patentinhaber: **Fried. Krupp AG Hoesch-Krupp
Altendorfer Strasse 103
D-45143 Essen(DE)**

(72) Erfinder: **Carlhoff, Christoph, Dr., Dipl.-Phys.
Am Sandacker 12
D-4156 Willich 2(DE)**
Erfinder: **Lorenzen, Claus-Jürgen, Dr.,
Dipl.-Phys.
Kocherstrasse 3
D-4300 Essen 18(DE)**
Erfinder: **Nick, Klaus-Peter, Dr.rer.nat,
Dipl.-Phys.
Am Westerfeld 17
D-2807 Achim(DE)**

EP 0 392 337 B1

APPLIED SPECTROSCOPY Band 40, Nr. 4, Mai-Juni 1986, Seiten 491-494, Frederick, Maryland, US; J.A. MILLARD et al.: "Time-Resolved Laser-Induced Breakdown Spectrometry for the Rapid Determination of Beryllium in Beryllium-Copper Alloys"

PROCEEDINGS OF THE SOCIETY OF PHOTO-OPTICAL INSTRUMENTATION ENGINEERS Band 644, 1986, Seiten 7-12, Redondo Beach, California, US; D.A. CREMERS et al.: "An evaluation of factors affecting the analysis of metals using laser-induced breakdown spectroscopy (LIBS)"

**Beschreibung**

Die Erfindung bezieht sich auf ein Verfahren zur Bestimmung des Konzentrationsverhältnisses $C_{ab}$ zweier Elemente a, b eines Stoffs aus dem Intensitätsverhältnis $I_{ab}$ zweier Spektrallinien dieser Elemente in einem Plasma dieses Stoffs mit den Anregungsenergien $E_a$ und $E_b$.

Voraussetzung dafür, daß derartige Verfahren ein verwertbares Ergebnis liefern, sind identische Meßbedingungen für Referenzproben; d. h. Größe und Temperaturverteilung über die Plasmen müssen im wesentlichen gleich sein. Dies läßt sich nur näherungsweise erreichen, falls das Trägerplasma durch die zu untersuchenden Substanzen nicht gestört wird bzw. anhand der Intensitätsverhältnisse bestimmter herausgefilterter Spektrallinien durch Vergleich mit einstellbaren Grenzwerten ein Sortiersignal gewonnen wird. Aus der Veränderung der Intensitätsverhältnisse wird dabei in herkömmlicher Weise das Konzentrationsverhältnis abgeleitet.

Die DE-OS 25 13 266 beschreibt die Möglichkeit, die Spektrallinien der zu prüfenden Legierungskomponenten über einen Intensitätsvergleich mit der Spektrallinie zu überprüfen, die bei einer vorgegebenen Konzentration des betreffenden Legierungsanteils vorliegt. Das Intensitätsverhältnis dient dabei lediglich der unmittelbaren Konzentrationsbestimmung, d. h. es wird nur dann ein Meßwert angezeigt, falls die Zusammensetzung der zu prüfenden Legierungskomponente von einem vorgegebenen Sollwert abweicht.

Aus "OPTICS AND LASER TECHNOLOGY", Band 12/Nr. 3, Juni 1980, Seiten 137 bis 143, ist ein gattungsgemäßes Verfahren bekannt, bei dem sich das Konzentrationsverhältnis aus $C_{ab} = Kd \cdot I_{ab}$ ergibt und wobei die Konstante Kd durch Messung des Intensitätsverhältnisses $I'_{ab}$ eines vergleichbaren Stoffes bei bekanntem Konzentrationsverhältnis $C'_{ab}$ bestimmt wird aus $Kd = C'_{ab}/I'_{ab}$. Das bekannte Verfahren ermöglicht durch Vergleich mit Stoffen bekannter Konzentration die Ermittlung des Konzentrationsverhältnisses zweier Elemente in einem unbekannten Stoff.

Der Erfindung liegt die Aufgabe zugrunde, ein Verfahren der eingangs erwähnten Gattung in der Weise auszugestalten, daß die Bestimmung des Konzentrationsverhältnisses am unbekannten Stoff on-line unabhängig von Referenzproben durchgeführt werden kann, wobei auch Meßwerte unterschiedlicher Plasmabedingungen ausgewertet werden können.

Die Aufgabe wird gemäß Anspruch 1 dadurch gelöst, daß im Plasma des zu analysierenden Stoffes zum einen das Intensitätsverhältnis $I_{ab}$ zweier Spektrallinien der Elemente a und b mit den Anregungsenergien $E_a$ und $E_b$ und zum anderen das Intensitätsverhältnis $I_{c1,2}$ zweier Spektrallinien 1 und 2 eines Elementes c im gleichen Plasma mit den unterschiedlichen Anregungsenergien $E_1$ und $E_2$ gemessen werden und dann nach Gleichung 1

$$C_{ab} = K \cdot I_{ab} \cdot (I_{c1,2})^{\frac{E_a - E_b}{E_2 - E_1}}, \qquad (1)$$

das Konzentrationsverhältnis $C_{ab}$ bestimmt wird. Die Konstante K wird vorher aus einem bekannten Konzentrationsverhältnis $C'_{ab}$ der Elemente a und b eines vergleichbaren Stoffes und den zugehörigen im Plasmaspektrum gemessenen Intensitätsverhältnissen $I'_{ab}$ mit den Anregungsenergien $E_a$ und $E_b$ und $I'_{c1,2}$ der Linien 1 und 2 mit den Anregungsenergien $E_1$ und $E_2$ nach Gleichung 2, die aus Gleichung 1 abgeleitet ist, berechnet.

$$K = \frac{C'_{ab}}{I'_{ab}} \cdot (I'_{c1,2})^{-\frac{E_a - E_b}{E_2 - E_1}} \qquad (2)$$

Die Gleichung ist jedoch nur dann gültig, wenn die Werte $I_{ab}$, $I_{c1,2}$ und $C_{ab}$ in einem Wertebereich liegen, in dem bei konstantem $I'_{c1,2}$ $I_{ab}$ in guter Näherung proportional zu $C'_{ab}$ ist und außerdem bei konstantem Konzentrationsverhältnis $C'_{ab}$ angenähert gilt:

3

$$\log (I'_{a,b}) = \log \left(\frac{C'_{ab}}{K}\right) - \frac{E_a - E_b}{E_2 - E_1} \cdot \log (I'_{c1,2}) \qquad (3)$$

Bei konstantem Konzentrationsverhältnis $C'_{ab}$ ist nach Gleichung 3, die sich durch Umformung aus Gleichung 2 ergibt, der Logarithmus des Intensitätsverhältnisses $I'_{ab}$ linear abhängig vom Logarithmus des Intensitätsverhältnisses $I'_{c1,2}$. Die Konstante K ist dann unabhängig vom Konzentrationsverhältnis $C'_{ab}$.

Besonders vorteilhaft ist es, wenn die Konstante K mit der Methode der linearen Regression bei konstantem Konzentrationsverhältnis $C'_{ab}$ für verschiedene Intensitätsverhältnisse $I'_{ab}$ und $I'_{c1,2}$ ermittelt wird. In diesem Fall werden bei gleicher Probe Plasmen verschiedener mittlerer Plasmatemperatur erzeugt.

Wenn die Konstante K bekannt ist, kann die Bestimmung des Konzentrationsverhältnisses $C_{ab}$ am unbekannten Stoff unabhängig von Referenzproben durchgeführt werden.

So können zum Beispiel die Referenzproben zur Bestimmung von K im Labor und die Intensitätsverhältnisse $I_{ab}$, $I_{c1,2}$ des unbekannten Stoffes bei bekanntem K direkt am Meßort bestimmt werden, so daß auf diese Weise das gesuchte Konzentrationsverhältnis $C_{ab}$ on-line ohne Referenzproben erhalten wird. Dieses Konzentrationsverhältnis ist entsprechend Gleichung 1 bei einer bestimmten mittleren Plasmatemperatur, gegeben durch das Verhältnis $I_{c1,2}$, linear abhängig von dem Intensitätsverhältnis $I_{ab}$.

Der zu analysierende Stoff kann fest, flüssig, gasförmig sein oder ein Gemisch dieser Aggregatzustände darstellen.

Vorteilhafterweise wird das Plasma durch einen Impulslaser induziert, und die Intensitäten $I_{ab}$ und $I_{c1,2}$ werden unmittelbar nach dem Laserimpuls in der Thermalisierungsphase gemessen.

Besonders vorteilhaft ist es, wenn der unbekannte Stoff flüssig, als Schmelze, vorliegt und die bekannten Stoffe, die Referenzproben, in fester Form vorliegen. So können z.B. das Konzentrationsverhältnis $C_{ab}$ des unbekannten Stoffes an einer Schmelze und die Konstante K an festen Proben bestimmt werden. Dieses Verfahren ist daher besonders günstig für Metall-Legierungen, deren Schmelze analysiert wird. Von besonderer Bedeutung sind dabei wiederum die Stahl-Legierungen.

Besonders günstige Ergebnisse lassen sich mittels des Verfahrens dann erzielen, wenn die Anregungsenergien $E_1$ und $E_2$ des Elementes c stark unterschiedlich sind.

Im Rahmen der erfindungsgemäßen Lehre kann das Element c auch das Element a oder b sein.

Der Gegenstand der Erfindung wird anhand eines Beispiels näher erläutert.

Zu bestimmen ist das Konzentrationsverhältnis $C_{Cr,Fe}$ von Chrom zu Eisen in einer flüssigen Stahlprobe. In diesem Fall entspricht Cr dem Element a, die Elemente b und c sind identisch und zwar Eisen.

Da die Elemente b und c identisch sind, brauchen nur drei Linien beobachtet zu werden, eine Chromlinie und zwei Eisenlinien (siehe Tabelle 1).

| Element | Spektrallinien-wellenlänge (nm) | Anregungsenergie $(cm^{-1})$ |
|---------|---------------------------------|------------------------------|
| Cr | 434,5 | 31.106 ($E_a$) |
| Fe1 | 437,0 | 47.453 ($E_b = E_1$) |
| Fe2 | 437,6 | 22.846 ($E_2$) |

Tabelle 1: Wellenlängen und Anregungsenergien der beobachteten Spektrallinien für Chrom und Eisen.

4

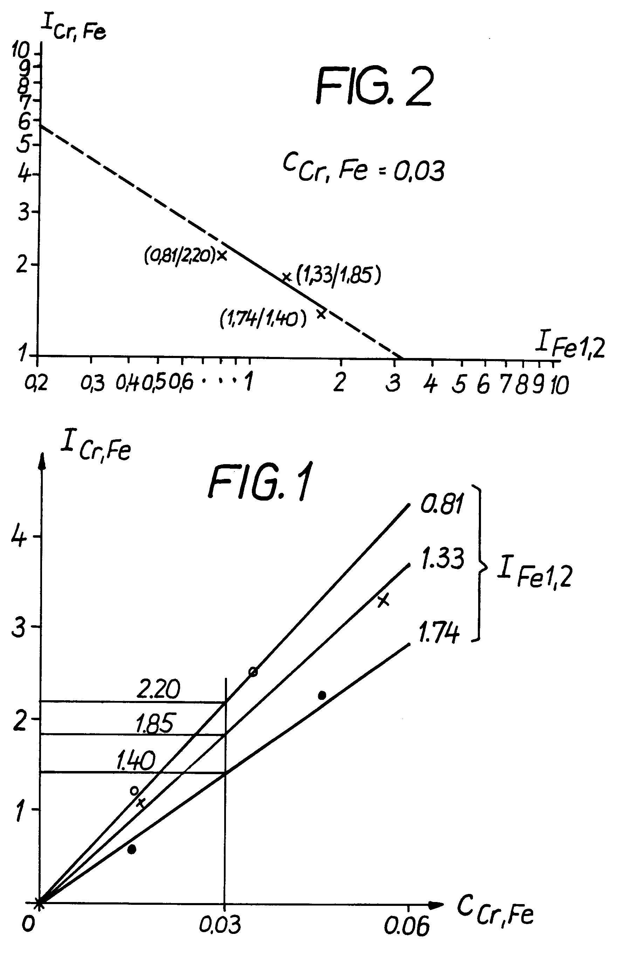

Der Exponent entsprechend Gleichung 2 beträgt für dieses Beispiel - 0,66. Zur Bestimmung der Konstanten K wird im Labor bei jeweils unterschiedlichen Intensitätsverhältnissen $I_{Fe1,2}$ die Abhängigkeit der Intensitätsverhältnisse $I_{Cr,Fe}$ von den Konzentrationsverhältnissen $C_{Cr,Fe}$ experimentell bestimmt. Das Ergebnis sind Geraden wie in Fig. 1 dargestellt. Einige Meßpunkte sind in Fig. 1 eingezeichnet, um deren Streuung exemplarisch zu verdeutlichen. Der Koordinatennullpunkt ist gemeinsamer Meßpunkt. Die Kurve mit $I_{c1,2}$ = 1,33 ist bei flüssiger Probe, die beiden anderen Kurven sind bei fester Probe gemessen worden. Bei einem festen Konzentrationsverhältnis Chrom zu Eisen von $C_{Cr,Fe}$ von z.B. 0,03 wird das Intensitätsverhältnis $I_{Cr,Fe}$ in Abhängigkeit von $I_{Fe1,2}$ aus Fig. 1 bestimmt. Es gilt dann entsprechend Gleichung 2:

$$I_{Cr,Fe} = \frac{0,03}{K} \cdot (I_{Fe1,2})^{-0,66} \qquad (4)$$

In Tabelle 2 sind drei Werte dazu angegeben. Fig. 2 zeigt die Gleichung 4 in doppeltlogarithmischer Darstellung entsprechend Gleichung 3.

| $I_{Cr,Fe}$ | $I_{Fe1,2}$ |
|---|---|
| 2,20 | 0,81 |
| 1,85 | 1,33 |
| 1,40 | 1,74 |

Tabelle 2: Aus Fig. 1 entnommene Werte zur Bestimmung von K mit $C_{Cr,Fe}$ = 0,03

Eine Auswertung der Fig. 2 mit Hilfe der linearen Regression ergibt K = 0,014. Gleichung 1 lautet damit für diesen konkreten Fall

$$C_{Cr,Fe} = 0,014 \cdot I_{Cr,Fe} \cdot (I_{FE1,2})^{+0,66} \qquad (5)$$

Nach Bestimmung der drei Linienintensitäten der Chromlinie und der beiden Eisenlinien einer unbekannten Schmelze können die Werte für $I_{Cr,Fe}$ und $I_{Fe1,2}$ ermittelt und kann dann nach Gleichung 5 das Konzentrationsverhältnis $C_{Cr,Fe}$ bestimmt werden.

**Patentansprüche**

1. Verfahren zur Bestimmung des Konzentrationsverhältnisses $C_{ab}$ zweier Elemente a und b eines Stoffs aus dem Intensitätsverhältnis $I_{ab}$ zweier Spektrallinien dieser Elemente in einem Plasma dieses Stoffs mit den Anregungsenergien $E_a$ und $E_b$, dadurch gekennzeichnet, daß das Konzentrationsverhältnis $C_{ab}$ durch Berücksichtigung des Verhältnisses $I_{c1,2}$ der Intensitäten zweier Spektrallinien 1 und 2 eines Elementes c im gleichen Plasma mit unterschiedlichen Anregungsenergien $E_1$ und $E_2$ gebildet wird aus

$$C_{ab} = K \cdot I_{ab} \cdot (I_{c1,2})^{\frac{E_a - E_b}{E_2 - E_1}} , \qquad (1)$$

wobei die Konstante K durch Messung der Intensitätsverhältnisse $I'_{ab}$ und $I'_{c1,2}$ eines vergleichbaren Stoffs bei bekanntem Konzentrationsverhältnis $C'_{ab}$ bestimmt wird mit

$$K = \frac{C'_{ab}}{I'_{ab}} \cdot (I'_{c1,2})^{- \frac{E_a - E_b}{E_2 - E_1}} \qquad (2)$$

und die Werte $I_{ab}$, $I_{c1,2}$ und $C_{ab}$ in einem Wertebereich liegen, in dem bei konstantem $I'_{c1,2}$ $I'_{ab}$ in guter Näherung proportional zu $C'_{ab}$ ist und außerdem bei bei konstantem Konzentrationsverhältnis $C'_{ab}$ angenähert gilt

$$\log (I'_{a,b}) = \log (C'_{ab}/K) - \frac{E_a - E_b}{E_2 - E_1} \cdot \log (I'_{c1,2}) \qquad (3)$$

**2.** Verfahren nach Anspruch 1, dadurch gekennzeichnet, daß das Plasma impulslaserinduziert ist und in der Thermalisierungsphase die Intensitäten $I_{ab}$ und $I_{c1,2}$ gemessen werden.

**3.** Verfahren zur Bestimmung des Konzentrationsverhältnisses $C_{ab}$ nach Anspruch 1, dadurch gekennzeichnet, daß die Konstante K durch lineare Regression bei einem konstanten Konzentrationsverhältnis $C'_{ab}$ aus mehreren Intensitätsverhältnissen $I'_{ab}$ und $I'_{c1,2}$ bestimmt wird durch:

$$\log (I'_{a,b}) = \log \left(\frac{C'_{ab}}{K}\right) - \frac{E_a - E_b}{E_2 - E_1} \cdot \log (I'_{c1,2}) \qquad (3)$$

**4.** Verfahren zur Bestimmung des Konzentrationsverhältnisses $C_{ab}$ zweier Elemente a, b nach Anspruch 1, dadurch gekennzeichnet, daß der unbekannte Stoff flüssig und der bekannte Stoff fest ist.

**5.** Verfahren zur Bestimmung des Konzentrationsverhältnisses $C_{ab}$ zweier Elemente a, b nach Anspruch 1 oder 4, dadurch gekennzeichnet, daß die Stoffe feste oder flüssige Metall-Legierungen sind.

**6.** Verfahren zur Bestimmung des Konzentrationsverhältnisses $C_{ab}$ zweier Elemente a, b nach Anspruch 5, dadurch gekennzeichnet, daß die Metall-Legierung eine Stahl-Legierung ist.

**Claims**

**1.** Method for determining the concentration ratio $C_{ab}$ of two elements a and b in a substance from the intensity ratio $I_{ab}$ of two spectral lines of these elements in a plasma of this substance with excitation energies $E_a$ and $E_b$, characterised in that the concentation ratio $C_{ab}$ is formed by taking into account the ratio $I_{c1,2}$ of the intensities of two spectral lines 1 and 2 of an element c in the same plasma with

different excitation energies $E_1$ and $E_2$ from

$$C_{ab} = K \cdot I_{ab} \cdot (I_{c1,2})^{\frac{E_a - E_b}{E_2 - E_1}} \qquad (1)$$

wherein the constant K is determined by measurement of the intensity ratio $I'_{ab}$ and $I'_{c1,2}$ of a comparable substance where the concentration ratio $C'_{ab}$ is known:

$$K = \frac{C'_{ab}}{I'_{ab}} \cdot (I'_{c1,2})^{-\frac{E_a - E_b}{E_2 - E_1}} \qquad (2)$$

and the values $I_{ab}$, $I_{c1,2}$ and $C_{ab}$ lie in a range in which, where $I'_{c1,2}$ is constant, $I'_{ab}$ is closely proportional to $C'_{ab}$ and moreover, where the concentration ratio $C'_{ab}$ is constant, the following approximation applies:

$$\log (I'_{a,b}) = \log (C'_{ab}/K) - \frac{E_a - E_b}{E_2 - E_1} \cdot \log (I'_{c1,2}) \qquad (3)$$

2. Method according to Claim 1, characterised in that the plasma is induced by impulse laser and the intensities $I_{ab}$ and $I_{c1,2}$ are measured in the thermalisation phase.

3. Method for determining the concentration ratio $C_{ab}$ according to Claim 1, characterised in that the constant K is determined from several intensity ratios $I'_{ab}$ and $I'_{c1,2}$ by linear regression with a constant concentration ratio $C'_{ab}$ by:

$$\log (I'_{a,b}) = \log \left(\frac{C'_{ab}}{K}\right) - \frac{E_a - E_b}{E_2 - E_1} \cdot \log (I'_{c1,2}) \qquad (3)$$

4. Method for determining the concentration ratio $C_{ab}$ of two elements a, b according to Claim 1, characterised in that the unknown substance is liquid and the known substance is solid.

5. Method for determining the concentration ratio $C_{ab}$ of two elements a, b according to Claim 1 or 4, characterised in that the substances are solid or liquid metal alloys.

6. Method for determining the concentration ratio $C_{ab}$ of two elements a, b according to Claim 5, characterised in that the metal alloy is a steel alloy.

**Revendications**

1. Procédé pour la détermination du rapport de concentration $C_{ab}$ de deux éléments a et b d'un matériau à partir du rapport $I_{ab}$ des intensités de deux lignes spectrales de ces éléments dans un plasma de ce matériau comportant les énergies d'excitation $E_a$ et $E_b$, caractérisé en ce que le rapport de concentration $C_{ab}$ est formé, en considérant le rapport $I_{cl,2}$ des intensités de deux lignes spectrales 1 et 2 d'un

7

élément c dans le même plasma comportant des énergies d'excitation $E_1$ et $E_2$ différentes, à partir de la formule

$$C_{ab} = K \cdot I_{ab} \cdot (I_{c1,2})^{\frac{E_a - E_b}{E_2 - E_1}} , \qquad (1)$$

étant entendu que la constante K est déterminée en mesurant le rapport des intensités $I'_{ab}$ et $I'_{c1,2}$ d'un matériau comparable pour un rapport de concentration $C'_{ab}$ connu, avec

$$K = \frac{C'_{ab}}{I'_{ab}} \cdot (I'_{c1,2})^{-\frac{E_a - E_b}{E_2 - E_1}} \qquad (2)$$

et que les valeurs $I_{ab}$, $I_{c1,2}$ et $C_{ab}$ se trouvent dans un dortaine de valeurs dans lequel, avec un $I'_{c1,2}$ constant, $I'_{ab}$ est, avec une bonne approximation, proportionnel à $C'_{ab}$, et que, de plus, avec un rapport de concentration $C'_{ab}$ constant, l'égalité

$$\log (I'_{a,b}) = \log (C'_{ab}/K) - \frac{E_a - E_b}{E_2 - E_1} \cdot \log (I'_{c1,2}) \qquad (3)$$

est sensiblement valable.

**2.** Procédé suivant la revendication 1, caractérisé en ce que le plasma est induit par impulsions laser et que les intensités $I_{ab}$ et $I_{c1,2}$ sont mesurées dans la phase de thermalisation.

**3.** Procédé pour la détermination du rapport de concentration $C_{ab}$ conformément à la revendication 1, caractérisé en ce que la constante K est déterminée par régression linéaire, le rapport de concentration $C'_{ab}$ étant constant, à partir de plusieurs rapports d'intensités $I'_{ab}$ et $I'_{c1,2}$, par la formule

$$\log (I'_{a,b}) = \log \left(\frac{C'_{ab}}{K}\right) - \frac{E_a - E_b}{E_2 - E_1} \cdot \log (I'_{c1,2}) \qquad (3)$$

**4.** Procédé pour la détermination du rapport de concentration $C_{ab}$ de deux éléments a et b conformément à la revendication 1, caractérisé en ce que le matériau inconnu est liquide et le matériau connu est solide.

**5.** Procédé pour la détermination du rapport de concentration $C_{ab}$ de deux éléments a et b conformément à la revendication 1 ou à la revendication 4, caractérisé en ce que les matériaux sont des alliages métalliques solides ou liquides.

**6.** Procédé pour la détermination du rapport de concentration $C_{ab}$ de deux éléments a et b conformément à la revendication 5, caractérisé en ce que l'alliage métallique est un alliage d'acier.

FIG. 2

$C_{Cr,Fe} = 0.03$

FIG. 1